Europäisches Patentamt

**European Patent Office**

Office européen des brevets

(19)

(11) Numéro de publication : **0 080 921**
**B1**

(12)

# FASCICULE DE BREVET EUROPÉEN

(45) Date de publication du fascicule du brevet :
**21.01.87**

(21) Numéro de dépôt : **82402113.3**

(22) Date de dépôt : **19.11.82**

(51) Int. Cl.⁴ : **H 05 B  6/14**, H 05 B  6/02,
H 05 B  6/36

(54) **Procédé et dispositif pour obtenir une homogénéité transversale de chauffage par induction électromagnétique de produits longs et minces en défilement continu.**

(30) Priorité : **24.11.81 FR 8121945**

(43) Date de publication de la demande :
**08.06.83 Bulletin 83/23**

(45) Mention de la délivrance du brevet :
**21.01.87 Bulletin 87/04**

(84) Etats contractants désignés :
**BE CH DE GB IT LI LU**

(56) Documents cités :
**EP-A- 0 022 707**
**CA-A- 1 066 783**
**CH-A-   616 291**
**DE-A- 2 204 816**
**DE-A- 2 609 978**
**US-A- 3 444 346**

(73) Titulaire : **ALSTHOM**
**38, avenue Kléber**
**F-75784 Paris Cédex 16 (FR)**

(72) Inventeur : **Travers, Roger**
**11 rue Pasteur**
**F-92290 Chatenay-Malabry (FR)**
Inventeur : **Camus, Jean-Paul**
**Résidence "Le Tourville" 222 Avenue de Mazargues**
**F-13008 Marseille (FR)**
Inventeur : **Maurice, Jean**
**11 Avenue du Maine**
**F-75015 Paris (FR)**

(74) Mandataire : **Weinmiller, Jürgen et ai**
**Lennéstrasse 9**
**D-8133 Feldafing (DE)**

Jouve, 18, rue St-Denis, 75001 Paris, France

## Description

L'invention se rapporte à un procédé selon le préambule de la revendication 1.

Par le document EP-A-0 022 707, on connaît un ensemble de ce genre dans lequel un support tournant creux en matière réfractaire loge un rotor entraîné par un moteur et comportant plusieurs pôles alimentés en courant continu, de polarités alternées, engendrant le champ magnétique glissant, une culasse assurant le retour du flux autour de la boucle formée par le produit en défilement sur le support tournant, un galet d'entrée et un galet de sortie étant prévus pour le produit. Le support tournant et le produit se trouvent donc dans l'entrefer existant entre le rotor inducteur et la culasse de retour de flux.

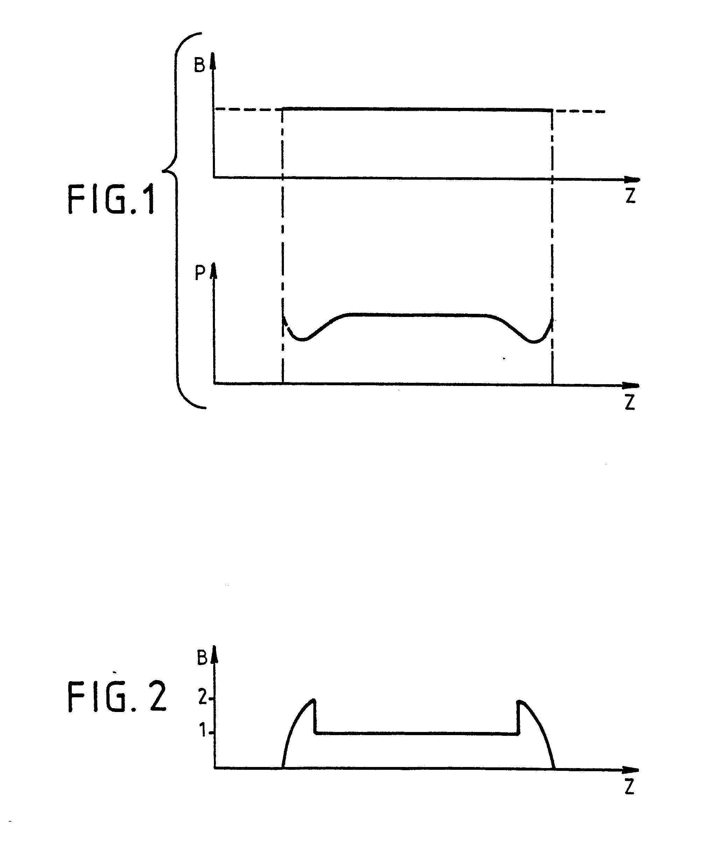

Lorsqu'un profil transversal de champ magnétique est uniforme sur toute la largeur d'un produit à chauffer, la puissance surfacique induite n'est constante, sur la largeur, que pour un produit de largeur infinie. Dans le cas d'un produit de largeur finie, la fermeture des courants induits engendre une variation de la puissance surfacique induite qui est fonction de la longueur d'onde du champ glissant (voir les diagrammes de la figure 1 des dessins annexés d'induction magnétique B et de puissance induite P) et des dimensions du produit.

Dans le document DE-A-22 04 816, on décrit un tambour rotatif qui doit être chauffé par un champ glissant. Ce champ est produit dans des bobines statiques alimentées en alternatif. Pour obtenir la même puissance au bout qu'au centre du tambour, on juxtapose transversalement plusieurs boucles de courant et on les alimente individuellement, si besoin en est. On propose aussi de déplacer périodiquement de telles bobines parallèlement à l'axe du tambour. Or, une telle méthode ne garantit un chauffage homogène que si le tambour a une grande inertie thermique. Cette méthode n'est donc pas applicable au chauffage d'une bande métallique en défilé continu.

Dans le document CH-A-616 291, on décrit un dispositif de chauffage pour une bande passant en continu entre deux jeux de bobines statiques. Ces bobines sont alimentées en courant alternatif. Une harmonisation du chauffage sur la largeur de la bande est obtenue grâce à des noyaux magnétiques auxiliaires qui servent à concentrer le champ magnétique au voisinage des bordures de la bande. Il est à noter que ce dispositif a été conçu pour chauffer des bandes en aluminium. En outre, dû au mauvais facteur de puissance de l'alimentation en courant alternatif, il faut prévoir des moyens de compensation de réactif.

Dans le document US-A-3 444 346, on prévoit des segments magnétiques ajustables à la place des noyaux auxiliaires précédemment mentionnés.

L'invention a donc pour but de proposer un procédé et un dispositif tels que définis ci-dessus avec un support tournant, assurant un profil transversal du champ magnétique tel que la bande passant en continu soit chauffée de façon homogène. Ce but est atteint par le procédé tel qu'il est défini dans la revendication 1.

Suivant une forme préférée de réalisation le dispositif selon l'invention comprend une culasse de retour de flux composée de trois éléments :

l'élément fixe créant la zone centrale uniforme du profil transversal du champ magnétique ; et

deux éléments mobiles de forme particulière pour créer les zones latérales dudit champ ; ces éléments mobiles coulissant à l'intérieur de l'élément fixe par l'intermédiaire de glissières, des vérins de préférence électriques permettant leur positionnement par rapport aux bords du produit à chauffer.

Selon une autre forme de réalisation, le dispositif selon l'invention comprend une culasse de retour de flux magnétique divisée en sections mobiles en translation et dont le positionnement est obtenu par des vérins pour s'adapter à des largeurs de produit différentes.

Selon encore une autre variante de réalisation, les sections sont mobiles autour d'un axe de rotation.

D'autres caractéristiques et avantages de la présente invention ressortiront de la description qui va suivre faite en regard des dessins annexés sur lesquels :

la figure 1    représente deux diagrammes explicatifs considérés ensemble pour la compréhension ;

la figure 2    représente un diagramme se rapportant spécifiquement à l'invention ;

la figure 3    est une vue en élévation, schématique, d'une forme de réalisation d'un dispositif de chauffage selon l'invention ;

la figure 4    est une vue en coupe partielle de ce dispositif ;

la figure 5    est une vue en élévation, schématique, d'une autre forme de réalisation d'un dispositif de chauffage selon l'invention ;

la figure 6    est une vue par le dessus de cette forme de réalisation ;

la figure 7    est une vue en élévation, schématique, d'une autre variante de dispositif de chauffage conforme à l'invention ; et

la figure 8    est une vue par le dessus de cette variante.

Le procédé selon l'invention permet d'obtenir une homogénéité transversale de chauffage par induction électromagnétique de produits longs et minces en défilement continu.

Il s'applique à un chauffage induit par un champ magnétique glissant créé par un champ magnétique invariable, le produit P se déplaçant sur un support tournant ayant le même axe de rotation, une culasse 2 assurant le retour de flux autour d'une boucle formée par le produit en défilement sur le support tournant 3.

Il consiste à créer un profil transversal du champ magnétique résultant glissant longitudinal qui soit uniforme dans la zone centrale du produit, puis croissant et décroissant dans ses zones latérales, de manière à obtenir un profil transversal résultant tel que représenté à la figure 2.

Sur cette figure, le profil du champ magnétique résultant dans le sens transversal est constitué d'une zone centrale de valeur uniforme et de deux zones latérales de forme approchant une demi-arche d'une sinusoïde ayant une longueur d'onde égale à la longueur d'onde longitudinale dudit champ et une amplitude double de celle de la zone centrale.

Ces compléments approximativement sinusoïdaux peuvent avantageusement être obtenus par une variation d'entrefer entre l'inducteur et la culasse de retour du flux, adaptable à différentes largeurs de produits.

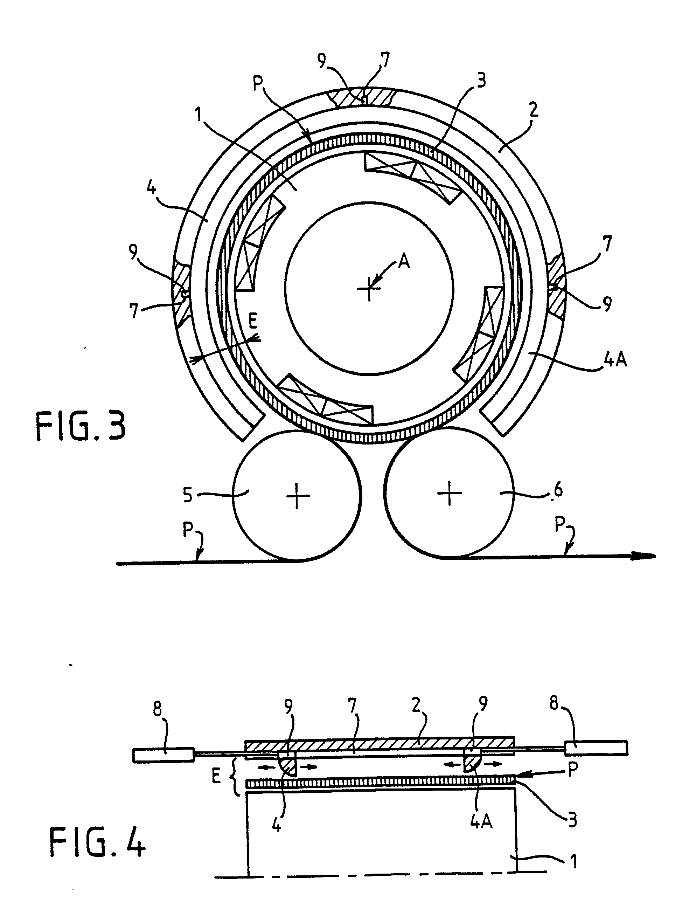

Dans la forme de réalisation représentée aux figures 3 et 4, un dispositif de chauffage par induction électromagnétique selon l'invention comprend un rotor inducteur multipolaire 1 et un élément de culasse fixe 2 séparés par un entrefer E et, dans un entrefer, un support tournant 3 et deux éléments mobiles de culasse 4-4A.

Les éléments mobiles de culasse 4-4A offrent la particularité d'être par exemple chacun d'une section sensiblement triangulaire, d'une dimension radiale égale approximativement à la moitié de l'entrefer E et de base égale au quart de la longueur d'onde du champ glissant au niveau du produit à chauffer P, lequel circule autour du support tournant en formant une boucle depuis un galet d'entrée 5 jusqu'à un galet de sortie 6.

Les éléments mobiles 4-4A coulissent parallèlement à l'axe général de rotation A à l'intérieur de l'élément fixe 2 par l'intermédiaire de glissières 7 et de vérins électriques 8 pour leur positionnement par rapport aux bords du produit à chauffer.

En d'autres termes, les éléments mobiles 4-4A sont en forme d'anneaux de section triangulaire disposés en vis-à-vis, ces anneaux étant pourvus de curseurs 9 susceptibles de coulisser dans les rainures des glissières 7. Les anneaux constituant les éléments mobiles sont, par ailleurs, interrompus sur une partie de leur circonférence de manière à ménager un espace pour l'emplacement des galets 5 et 6. Il en est de même pour l'élément de culasse 2 qui montre une brèche longitudinale pour l'emplacement des galets.

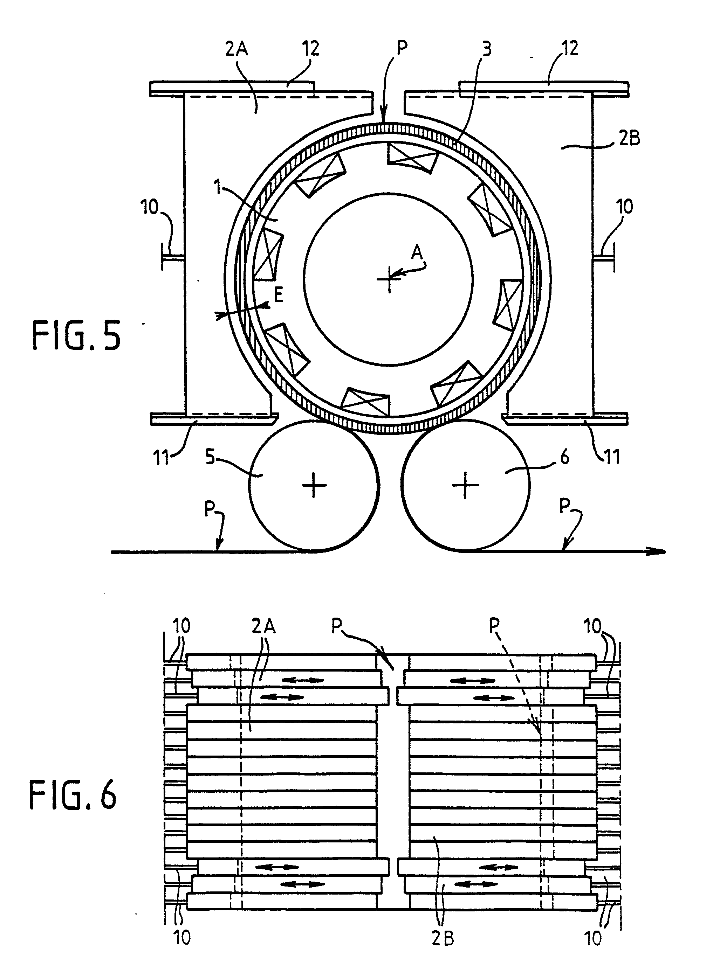

Dans la forme de réalisation représentée aux figures 5 et 6, on retrouve un rotor inducteur multipolaire 1, un support tournant 3, un galet d'entrée 5 et un galet de sortie 6. Dans cette forme de réalisation, la culasse de retour de flux magnétique comprend des sections 2A-2B mobiles en translation perpendiculaire à l'axe général de rotation A et dont le positionnement est obtenu par des vérins électriques 10 (représentés partiellement pour la clarté du dessin) pour s'adapter à des largeurs de produit différentes.

Il existe, en fait, deux groupes en vis-à-vis de sections mobiles ; un groupe de sections 2A et un groupe de sections 2B. Chaque section a sensiblement la forme d'un « C » ouvert sur l'ensemble : rotor inducteur 1 — support tournant 3 —

produit P et chaque section peut être guidée par un jeu de deux glissières ; une glissière inférieure 11 et une glissière supérieure 12.

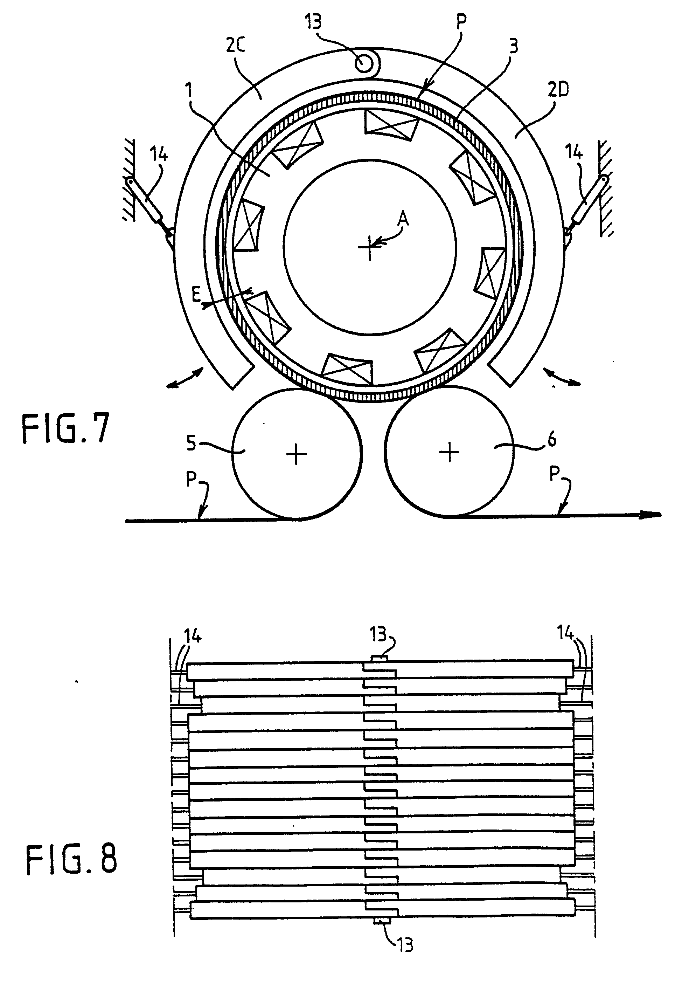

Dans la forme de réalisation représentée aux figures 7 et 8, on retrouve un rotor inducteur multipolaire 1, un support tournant 3, un galet d'entrée 5 et un galet de sortie 6. Dans cette forme de réalisation, la culasse de retour de flux magnétique comprend des sections 2C-2D mobiles angulairement autour d'un axe de rotation commun 13 parallèle à l'axe général de rotation A et dont le positionnement est obtenu par des vérins électriques 14. Il existe, en vis-à-vis, le groupe des sections 2C et le groupe des sections 2D et chaque section a sensiblement la forme d'un « C » ouvert sur l'ensemble : rotor inducteur 1 — support tournant 3 — produit P. L'axe 13 suffit au maintien de toutes les sections en même temps qu'il permet leur rotation.

Il est bien entendu, enfin, que la présente invention n'a été décrite et représentée qu'à titre d'exemple préférentiel et qu'on pourra apporter des équivalences dans ses éléments constitutifs sans, pour autant, sortir du cadre de l'invention.

## Revendications

1. Procédé pour obtenir une homogénéité transversale de chauffage par induction électromagnétique de produits conducteurs longs et minces en défilement continu, le chauffage étant induit par un champ magnétique glissant créé par la rotation d'un champ magnétique invariable, le produit se déplaçant sur un support tournant ayant le même axe de rotation, une culasse assurant le retour de flux autour de la boucle formée par le produit en défilement sur le support tournant, caractérisé en ce qu'il consiste à créer un profil transversal du champ magnétique résultant glissant longitudinal qui soit uniforme dans la zone centrale du produit, puis croissant et décroissant dans ses zones latérales par une variation d'entrefer entre l'inducteur et la culasse de retour de flux magnétique, ladite variation d'entrefer étant adaptable à différentes largeurs de produits, chacune des deux zones latérales du profil du champ magnétique présentant une forme approchant une demi-arche d'une sinusoïde ayant une longueur d'onde égale à la longueur d'onde longitudinale dudit champ et une amplitude double de celle de la zone centrale.

2. Dispositif pour la mise en œuvre du procédé selon la revendication 1, caractérisé en ce qu'il comprend au moins un élément de culasse de retour de flux (par bord de produit considéré) rendu mobile par rapport à un élément fixe de cette culasse (lequel crée le profil transversal uniforme de champ magnétique), d'où l'obtention de la variation d'entrefer entre l'inducteur et la culasse.

3. Dispositif selon la revendication 2, caractérisé en ce que les éléments mobiles de culasse de retour de flux se déplacent parallèlement à l'axe général de rotation (A) du dispositif.

4. Dispositif selon la revendication 2, caractérisé en ce que les éléments mobiles se déplacent perpendiculairement à l'axe général de rotation (A) du dispositif.

5. Dispositif selon la revendication 3, caractérisé en ce que les éléments mobiles (4-4A) coulissent parallèlement à l'axe général de rotation à l'intérieur de l'élément fixe de culasse (2) par l'intermédiaire de glissières (7) et de vérins (8) pour leur positionnement par rapport aux bords du produit à chauffer.

6. Dispositif selon l'une quelconque des revendications 2, 3 et 5, caractérisé en ce que les éléments mobiles (4-4A) sont en forme d'anneaux de section sensiblement triangulaire disposés en vis-à-vis, de dimension radiale égale approximativement à la moitié de l'entrefer (E) et de base égale au quart de la longueur d'onde du champ magnétique au niveau du produit.

7. Dispositif selon la revendication 6, caractérisé en ce que les éléments mobiles en forme d'anneaux (4-4A) de section triangulaire disposés en vis-à-vis sont pourvus de curseurs (9) susceptibles de coulisser dans les glissières (7).

8. Dispositif selon l'une quelconque des revendications 2 et 4, caractérisé en ce que les éléments mobiles en translation perpendiculaire à l'axe général de rotation du dispositif sont constitués par des sections mobiles disposées en deux groupes en vis-à-vis (2A-2B), chaque section ayant sensiblement la forme d'un « C » ouvert sur l'ensemble : rotor inducteur (1) — support tournant (3) — produit (B), le positionnement des sections mobiles étant obtenu par des vérins (10) pour s'adapter à des largeurs de produit différentes.

9. Dispositif selon la revendication 8, caractérisé en ce que chaque section peut être guidée par un jeu de glissières (11-12).

10. Dispositif selon l'une quelconque des revendications 2 et 3, caractérisé en ce que les éléments mobiles en translation perpendiculaire à l'axe général de rotation sont constitués par des sections (2C-2D) mobiles angulairement autour d'un axe de rotation commun (13) parallèle à l'axe général de rotation (A) du dispositif.

11. Dispositif selon la revendication 10, caractérisé en ce qu'il existe, en vis-à-vis, un groupe de section (2C) et un groupe de section (2D), chaque section ayant sensiblement la forme d'un « C » ouvert sur l'ensemble : rotor inducteur (1) — support tournant (3) — produit (B), des vérins (14) permettant le positionnement des sections.

**Claims**

1. A method for obtaining a homogenous transversal heating by an electromagnetic induction of continuously moving elongated thin conductive products, the heat energy being induced by a sliding magnetic field created by the rotation of an invariable magnetic field, the product being displaced on a rotating support having the same axis of rotation, a yoke ensuring the return of the flux around the loop formed by the product which moves on the rotating support, characterized in that it consists in creating a transversal profile of the resulting sliding longitudinal magnetic field, this profile being uniform in the central zone of the product and increasing and then decreasing in its lateral zones due to a variation of the gap between the inductor and the magnetic flux return yoke, said variation of the gap being adjustable to different widths of the product, each one of the two lateral zones of the magnetic field profile presenting a shape which approaches a semi-arc of a sinusoid wave having a wavelength equal to the longitudinal wavelength of the moving field and an amplitude equal to twice that of the central zone.

2. A device for realizing the method according to claim 1, characterized in that it comprises at least one flux return yoke element (for each edge of the product under consideration), this element being rendered movable with respect to a stationary yoke element (which creates the transversal uniform profile of the magnetic field), in order to obtain the variation of the gap between the inductor and the yoke.

3. A device according to claim 2, characterized in that the movable elements of the flux return yoke are displaced parallelly to the general axis of rotation (A) of the device.

4. A device according to claim 2, characterized in that the movable elements move perpendicularly to the general axis of rotation (A) of the device.

5. A device according to claim 3, characterized in that the movable elements (4-4A) are made to slide parallelly to the general axis of rotation inside the stationary yoke element (2) on sliders (7) and due to jacks (8) for their positioning with respect to the edges of the product to be heated.

6. A device according to any one of claims 2, 3 and 5, characterized in that the movable elements (4-4A) are ring-shaped with a substantially triangular section and are disposed opposite to each other, the radial dimension of these elements being substantially equal to half the gap dimension (E) and the basis being equal to a quarter wavelength of the magnetic field at the level of the product.

7. A device according to claim 6, characterized in that the movable elements in the form of rings (4-4A) of triangular cross-section, which are disposed opposite to each other, are provided with runners (9) capable of sliding in the sliders (7).

8. A device according to any one of claims 2 and 4, characterized in that the elements which are movable in translation perpendicularly to the general axis of rotation of the device are constituted by movable sections arranged in two groups in face to face relationship (2A-2B), each section having substantially the shape of a C which opens onto the inductor rotor (1), the rotating support (3) and the product (P), the positioning of the movable sections being obtained by jacks (10) in view of the adaption to different widths of the product.

9. A device according to claim 8, characterized in that each section can be guided by a set of sliders (11-12).

10. A device according to any one of claims 2 and 3, characterized in that the elements which are movable in translation perpendicularly to the general axis of rotation are constituted by sections (2C-2D) which are angularly movable around a common axis of rotation (13) which is parallel to the general axis of rotation (A) of the device.

11. A device according to claim 10, characterized in that a section group (2C) and a section group (2D) are disposed in face to face relationship, each section having substantially the shape of a C which opens onto the inductor rotor (1), the rotating support (3) and the product (P), jacks (14) being provided for the positioning of the sections.

**Patentansprüche**

1. Verfahren zur Erzielung einer transversalen Homogenität bei der elektromagnetischen Induktionsaufheizung von länglichen und dünnen elektrisch leitenden und kontinuierlich bewegten Produkten, wobei die Heizenergie von einem Gleitmagnetfeld induziert wird, das durch die Drehung eines invariablen Magnetfelds erzeugt wird, und das Produkt auf einem drehbaren Träger bewegt wird, der dieselbe Drehachse besitzt, und wobei ein Magnetkern die Rückkehr des Flusses um die vom auf dem drehenden Träger vorbeibewegten Produkt gebildete Schleife sichert, dadurch gekennzeichnet, daß es darin besteht, ein transversales Profil des resultierenden gleitenden Magnetfelds in Längsrichtung zu erzeugen, das in der zentralen Zone des Produkts gleichmäßig ist, dann in den seitlichen Zonen durch eine Veränderung des Magnetspalts zwischen dem Induktor und dem Magnetkern für die Rückkehr des Magnetflusses zunimmt und wieder abnimmt, wobei die Veränderung des Magnetspalts an verschiedene Breiten des Produkts anpaßbar ist und jede der beiden seitlichen Zonen des Magnetfeldprofils eine Form besitzt, die einem Halbbogen eines Sinusoids mit einer Wellenlänge gleich der Längswellenlänge des Feldes und einer doppelten Amplitude im Vergleich zu der der zentralen Zone angenähert ist.

2. Vorrichtung zur Durchführung des Verfahrens nach Anspruch 1, dadurch gekennzeichnet, daß sie mindestens ein Magnetkernelement für die Flußrückkehr (pro betrachteten Produktrand) besitzt, das bezüglich eines festen Elements dieses Magnetkerns (das das gleichmäßige Querprofil des Magnetfelds erzeugt) beweglich gemacht ist, wodurch sich die Veränderung des Magnetspalts zwischen dem Induktor und dem Magnetkern ergibt.

3. Vorrichtung nach Anspruch 2, dadurch gekennzeichnet, daß die beweglichen Magnetkernelemente für die Flußrückkehr sich parallel zur allgemeinen Drehachse (A) der Vorrichtung verschieben lassen.

4. Vorrichtung nach Anspruch 2, dadurch gekennzeichnet, daß sich die beweglichen Elemente senkrecht zur allgemeinen Drehachse (A) der Vorrichtung verschieben lassen.

5. Vorrichtung nach Anspruch 3, dadurch gekennzeichnet, daß die beweglichen Elemente (4-4A) parallel zur allgemeinen Drehachse im Innern des festen Magnetkernelements (2) auf Gleitschienen (7) und mithilfe von Kraftzylindern (8) verschiebbar sind und so bezüglich der Ränder des zu erwärmenden Produkts in Stellung gebracht werden können.

6. Vorrichtung nach einem beliebigen der Ansprüche 2, 3 und 5, dadurch gekennzeichnet, daß die beweglichen Elemente (4-4A) die Form von Ringen mit einer im wesentlichen dreieckigen Querschnittsfläche besitzen, die einander gegenüberliegen und eine radiale Abmessung etwa gleich der Hälfte des Magnetspalts (E) und eine Basis gleich einem Viertel der Wellenlänge des Magnetfelds in Höhe des Produkts besitzen.

7. Vorrichtung nach Anspruch 6, dadurch gekennzeichnet, daß die beweglichen einander gegenüberliegenden Elemente (4-4A) in Ringform und mit Dreieckquerschnitt Läufer (9) besitzen, die in den Gleitschienen (7) gleiten können.

8. Vorrichtung nach einem beliebigen der Ansprüche 2 und 4, dadurch gekennzeichnet, daß die Elemente, die senkrecht zur allgemeinen Drehachse der Vorrichtung translatorisch beweglich sind, aus beweglichen Abschnitten bestehen, die in zwei einander gegenüberliegenden Gruppen (2A-2B) angeordnet sind, wobei jeder Abschnitt im wesentlichen die Form eines zum Induktionsrotor (1), dem drehenden Träger (3) und dem Produkt (P) offenen C besitzt und die beweglichen Abschnitte durch Kraftzylinder (10) in Stellung gebracht werden, um sie an unterschiedliche Breiten des Produkts anpassen zu können.

9. Vorrichtung nach Anspruch 8, dadurch gekennzeichnet, daß jeder Abschnitt durch einen Satz von Gleitschienen (11-12) geführt werden kann.

10. Vorrichtung nach einem beliebigen der Ansprüche 2 und 3, dadurch gekennzeichnet, daß die senkrecht zur allgemeinen Drehachse translatorisch beweglichen Elemente von Abschnitten (2C-2D) gebildet werden, die winkelmäßig um eine gemeinsame Drehachse (13), die parallel zur allgemeinen Drehachse (A) der Vorrichtung verläuft, beweglich sind.

11. Vorrichtung nach Anspruch 10, dadurch gekennzeichnet, daß sich eine Abschnittsgruppe (2C) und eine Abschnittsgruppe (2D) einander gegenüberliegen, wobei jeder Abschnitt im wesentlichen die Form eines zum Induktionsrotor (1), dem drehbaren Träger (3) und dem Produkt (P) offenen C besitzt und Kraftzylinder (14) die Abschnitte in Stellung zu bringen vermögen.

FIG.1

B

Z

P

Z

FIG. 2

B

2

1

Z

FIG. 3

FIG. 4

FIG.5

FIG.6

FIG.7

FIG.8